(19)

Europäisches
Patentamt
European
Patent Office
Office européen
des brevets

(11) **EP 2 469 631 A1**

(12) **EUROPEAN PATENT APPLICATION**

(43) Date of publication:
**27.06.2012 Bulletin 2012/26**

(21) Application number: **11194656.2**

(22) Date of filing: **20.12.2011**

(51) Int Cl.:
$H01M\ 4/54^{(2006.01)}$       $H01M\ 4/58^{(2010.01)}$
$H01M\ 4/485^{(2010.01)}$     $H01M\ 4/525^{(2010.01)}$
$H01M\ 4/131^{(2010.01)}$     $H01M\ 4/136^{(2010.01)}$
$H01M\ 10/054^{(2010.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.12.2010 JP 2010286916**

(71) Applicant: **Hitachi Ltd.**
**Tokyo 100-8280 (JP)**

(72) Inventors:
• **Aoyagi, Takuya**
**Tokyo, 100-8220 (JP)**

• **Naito, Takashi**
**Tokyo, 100-8220 (JP)**
• **Fujieda, Tadashi**
**Tokyo, 100-8220 (JP)**
• **Sawai, Yuichi**
**Tokyo, 100-8220 (JP)**
• **Nishimura, Katsunori**
**Tokyo, 100-8220 (JP)**
• **Yonemoto, Masahiro**
**Tokyo, 100-8220 (JP)**

(74) Representative: **Beetz & Partner**
**Patentanwälte**
**Steinsdorfstrasse 10**
**80538 München (DE)**

(54) **Positive electrode active material for secondary battery and magnesium secondary battery using the same**

(57)     In a positive electrode active material for a magnesium secondary battery and a magnesium secondary battery using it, there is contained a powder particle containing a crystal phase having a structure formed with aggregation of a plurality of crystallites (101), and amorphous phases (103a, 103b) formed between the crystallites (101) themselves; the amorphous phases (103a, 103b) contain at least one kind of a metal oxide selected from a vanadium oxide, an iron oxide, a manganese oxide, a nickel oxide and a cobalt oxide; and the crystal phase and the amorphous phases (103a, 103b) use the positive electrode active material enabling to store and release magnesium ions.

FIG. 1B

EP 2 469 631 A1

**Description**

BACKGROUND OF THE INVENTION

The present invention relates to a positive electrode active material for a secondary battery and magnesium secondary battery using the same.

With compact sizing of personal computers, video cameras, mobile phones or the like, lithium secondary batteries have been practically used and prevailed widely, in a field of information-related equipment and communication equipment, as a power source to be used in these devices. This lithium secondary battery is generally composed of a positive electrode using a lithium-transition metal oxide such as $LiCoO_2$ as a positive electrode active material, a negative electrode using metal lithium, a carbon material or the like as a negative electrode active material, and an electrolyte dissolved with a lithium salt, as a supporting electrolyte, in an organic solvent. In charging, lithium desorbed from the positive electrode is stored in the negative electrode, on the contrary, in releasing, lithium desorbed from the negative electrode is stored in the positive electrode. That is, it is a locking-chair-type secondary battery using lithium as a carrier.

This lithium secondary battery has an advantage of having high operation voltage and high energy density, because metal lithium or a carbon material using as the negative electrode active material has low reaction potential with lithium, as well as a non-aqueous type electrolytic solution is utilized as an electrolytic solution, and thus applications thereof have been rapidly increasing, as a power source for a compact-type mobile device.

However, lithium to be used as the carrier of the lithium secondary battery is extremely active and has, for example, such a risk as burning by reaction with moisture in air. This requires sufficient consideration on dry environment without moisture in a manufacturing process of the lithium secondary battery, which also leads to increase in manufacturing cost. In addition, in the case of using a lithium metal as the negative electrode in the lithium secondary battery, deposition of dendrite (needle-like crystal) with charge-discharge reactions causes a short circuit by penetration of the dendrite through a separator, which may cause burning of a solvent or the like. Accordingly, it has been desired to create a new-type locking-chair-type secondary battery by changing material to be used as the carrier.

In addition, there is a problem that proven reserve of lithium is as small as about 11 million tons, as well as highly unevenly distributed. Therefore, to expand the secondary battery into high capacity power source applications in the future, it is a premise to be able to secure a battery material required for large quantity prevalence, in consideration of the resource amount of the material to be used as the battery. Furthermore, it is considered desirable to select a material having amount of its raw material more stably supplied, and lower possibility of price variation.

Under such circumstance, by focusing on magnesium which is abundant in resource amount, development of a battery utilizing it as the material of the secondary battery, that is, magnesium secondary batteries have gradually been promoted in Japan and abroad. Magnesium is cheaper than lithium and has high electric capacity density (2.21 Ah/kg), although it is about 2/3 as compared with lithium. Battery cost per capacity can be reduced, by bringing the performance of the magnesium secondary batteries close to that of the lithium ion battery.

As for the magnesium secondary battery having the above advantages, investigation on various positive electrode materials has been performed. Because magnesium as the carrier of the magnesium secondary battery is divalent, it has larger electrostatic attraction and repulsion than monovalent lithium. Therefore, there is a problem of slower diffusion rate and easier trap in the positive electrode active material as compared with lithium. Accordingly, to apply magnesium as the positive electrode material, it is necessary to solve these problems.

In JP-A-2001-76721, as the positive electrode material for the magnesium secondary battery, investigation on $MgMn_2O_4$ has been performed. In JP-A-2002-255555, as the positive electrode material for the magnesium secondary battery, investigation on a magnesium composite oxide having a layer-like crystal structure represented by a composition formula, $Mg_xM1_{1-y}M2_yO_2 \cdot nH_2O$ has been performed. In JP-A-2005-228589, as the positive electrode material for the magnesium secondary battery, investigation on oxides represented by a general formula MO, or sulfides represented by MS has been performed. In JP-A-2006-505109, as the positive electrode material for the magnesium secondary battery, investigation on an oxide having a rutile structure, mainly $TiO_2$, has been performed. In JP-A-2007-280627, as the positive electrode material for the magnesium secondary battery, investigation on oxide spositive electrode material containing Mo having an oxidation number of 6 has been performed. In JP-A-2009-64731, as the positive electrode material for the magnesium secondary battery, investigation on a manganese oxide obtained by heat treatment of a precipitate generated by a reaction between a permanganate salt and hydrochloric acid has been performed. In JP-A-2007-157416, investigation on a halogen compound-type positive electrode material, mainly on chlorine compound-type positive electrode material, has been performed.

SUMMARY OF THE INVENTION

It is an object of the present invention to provide a positive electrode active material for the magnesium secondary battery having high charge-discharge cycle retention rate and high capacity, and a magnesium secondary battery using the same.

The positive electrode active material for the secondary battery of the present invention is a positive electrode active material for a secondary battery containing a crystal phase and an amorphous phase, characterized in that the crystal phase is an oxide containing vanadium for storing and releasing magnesium.

According to the present invention, the positive electrode active material for the magnesium secondary battery not only having high cycle retention rate but also increased battery capacity can be provided. In addition, by using this positive electrode active material, a magnesium secondary battery having high energy density can be obtained.

Other objects, features and advantages of the invention will become apparent from the following description of the embodiments of the invention taken in conjunction with the accompanying drawings.

BRIEF DESCRIPTION OF THE DRAWINGS

FIG 1A is a schematic drawing illustrating a fine structure of a positive electrode active material for a secondary battery according to an example.

FIG 1B is a schematic drawing illustrating a further magnified fine structure of a positive electrode active material for the secondary battery of FIG 1A.

FIG 2A is a SEM image of positive electrode active material for a secondary battery No. 1-3 of the example.

FIG 2B is a magnified SEM image of a positive electrode active material for the secondary battery shown in FIG 2A.

FIG 2C is a schematic drawing of the SEM image of FIG 2A.

FIG 2D is a schematic drawing of a magnified SEM image of FIG 2B.

FIG 3 is an EDX analysis result of an amorphous phase of No. 1-3 relevant to the example.

FIG 4 is a schematic drawing of an internal structure of a magnesium secondary battery.

DETAILED DESCRIPTION OF THE EMBODIMENTS

Explanation will be given below on one embodiment of the present invention. However, the present invention should not be limited to Examples explained here, and any combination, as appropriate, may be allowed.

Explanation will be given below with reference to drawings.

(Positive electrode active material for a secondary battery)

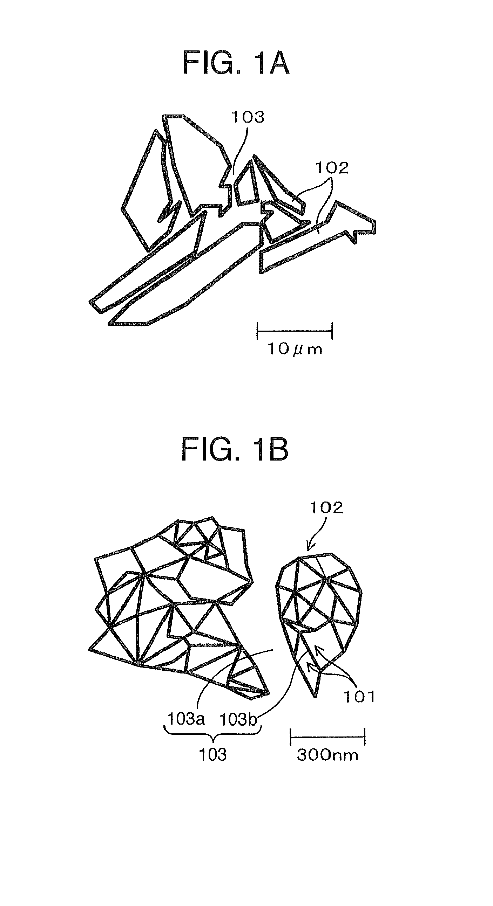

FIG 1A is a schematic drawing illustrating a fine structure of the positive electrode active material of a secondary battery according to an example. In addition, FIG 1B is a schematic drawing illustrating a further magnified fine structure of the positive electrode active material of the secondary battery of FIG. 1A.

In FIG 1A, the crystal of the positive electrode active material for the secondary battery has a composition including secondary particles 102 and an amorphous phase 103a (it may also be referred to as an amorphous grain boundary or an amorphous oxide phase), and the amorphous phase 103a is formed in a gap between adjacent secondary particles 102. Here adjacent" means "adjacent each other".

In FIG 1B, primary particles 101 of the crystal aggregate and form the secondary particle 102 having a shape like grape bunch. The amorphous phase 103a is formed around this secondary particle 102. In addition, in FIG 1B, a fine amorphous phase 103b (represented by a solid line because of a very narrow region) is formed in a gap between adjacent primary particles 101.

In the amorphous phases 103a, 103b, comings and goings of magnesium ions in charge-discharge become easier as compared with inside of the crystallites (the primary particles 101 of crystal), because distance between atoms constituting the phase is increased. Therefore, in the case where the grain boundary of the crystallites is the amorphous phase 103 having a structure of large inter-atomic distance, it plays a role of increasing a diffusion rate of the magnesium ions coming and going between the grain boundary and the crystallites in the charge-discharge. Furthermore, the presence of this amorphous phase is capable of suppressing trap of the magnesium ions and enhancing cycle retention rate of the positive electrode active material.

In general, it has been known that the amorphous phase 103 has low battery capacity.

On the contrary, in the positive electrode active material of the example, the amorphous phase 103 not only plays the role of increasing the diffusion rate of the magnesium ions coming and going between the grain boundary and the crystallites in the charge-discharge, but also has a numbers of magnesium ions which can be inserted into a structure of the amorphous phase 103. Accordingly, it is capable of not only enhancing the cycle retention rate of the positive electrode active material but also enhancing battery capacity.

Ratio of the crystal phase of the positive electrode active material to the magnesium secondary battery is from 50% by volume or higher to below 94% by volume.

In order to enhance the cycle retention rate, more above-described amorphous phase 103 is more desirable, and the ratio of the amorphous phase 103 of below 6% by volume results in decrease in the cycle retention rate of the positive electrode active material.

The positive electrode active material may contain carbon. Carbon to be added may be powder-like, as well as it can be coated at the powder surface of the positive electrode active material, and in any case it is added to adjust electric resistance of the positive electrode active material.

(Amorphous phase)

The amorphous phase of the positive electrode active material contains at least phosphorous, and furthermore contains one or more kinds of elements selected from iron, molybdenum, tungsten, calcium, lithium, sodium, potassium, silver, copper, magnesium, manganese, nickel, sulfur, fluorine, chlorine and iodine.

It is preferable that vanadium, iron, manganese, nickel and cobalt contained in the amorphous phase are 0.5 to 9.0 in atomic ratio (atomic number ratio), relative to phosphorous contained in the amorphous phase. In a range of atomic ratio of 0.5 to 9.0, a strong effect of enhancing the battery capacity and the cycle retention rate appears. In a range of atomic ratio below 0.5 or over 9.0, the structure of the amorphous phase for the charge-discharge becomes unstable and the effect of enhancing battery capacity and the cycle retention rate decreases.

In addition, by inclusion of sulfur, fluorine, chlorine and iodine in the amorphous phase, magnesium ions to be trapped in the positive electrode decreases and the cycle retention rate of the positive electrode active material can be enhanced more.

(Crystallite)

The crystallites of the positive electrode active material are an oxide phase containing vanadium. In order to enhance the battery capacity, it is necessary that storage and release of magnesium ions to and from the positive electrode active material are performed easily. The crystallites are required to have a large capacity in addition to that.

The crystallites containing vanadium preferably contain monoclinic crystals.

The monoclinic crystal has a cylindrical structure where cations (X) are regularly bound between layers of a layer-like structure of a vanadium oxide. "X" is preferably any one of Li, Na, K, Cu, Ag, Ca and Fe, in view of safety and easy availability.

The average crystallite size of the above crystal is desirably 300 nm or smaller. Too large crystallite size increases transfer distance of magnesium ions, which decreases the charge-discharge rate and at the same time makes it easy to be trapped into the crystal.

(Generation of the crystallite and the amorphous phase)

The positive electrode active material is obtained by heat treating oxide glass containing vanadium and phosphorous.

The amorphous phase containing phosphorous can form oxide glass by mixing one or more kinds of metals among vanadium, iron, manganese, nickel and cobalt with phosphorous powder, and then by a melt extraction. Among these metals, it is preferable to be one or more kinds of metal elements selected from the group consisting of vanadium, iron and manganese, which are capable of forming a stable amorphous phase against the charge-discharge.

The oxide glass may be added further with a monovalent cation element. The monovalent cation element is a component to prepare the crystallite by heat treatment.

By heat treatment of the oxide glass at a temperature higher than crystallization initialization temperature, the crystallite can be formed in the oxide glass. The crystallite has different crystal states generated depending on heat treatment condition, because it is generated by two stages of crystal nucleus generation and growth of the crystal.

In the case of decreasing the diameter of the crystallite, it is maintained for a long period at crystal nucleus generation temperature to deposit sufficient crystal nuclei, and then to grow them.

In addition, in the case of increasing the diameter of the crystallite, it is a general method to grow the crystal by passing through the crystal nucleus generation temperature rapidly and to grow at high temperature with maintaining it in a state that the number of the crystal nucleus is few.

The amorphous phase can be present in the structure of the oxide glass even after heat treatment, by controlling deposition and growth of the crystallite. The composition of the amorphous phase is different from the composition of the oxide glass before heat treatment, because the ratio of a component deposited as the crystallite has been decreased.

(Magnesium secondary battery)

Explanation will be given below on a composition of the magnesium secondary battery.

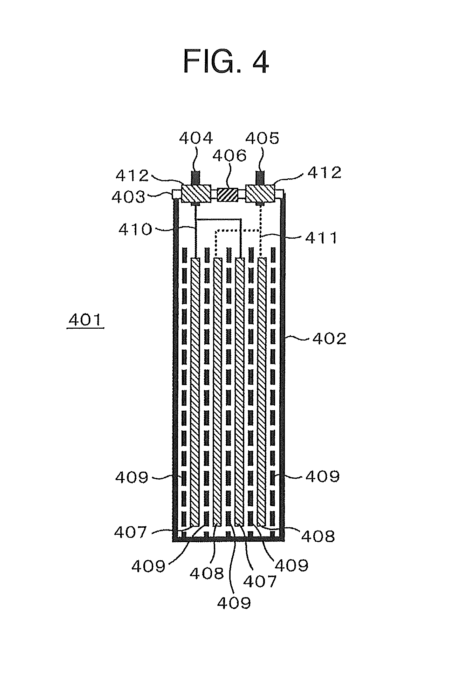

FIG 4 is a drawing schematically illustrating an internal structure of a magnesium secondary battery 401. The magnesium secondary battery 401 is an electrochemical device enabling to store and utilize electric energy by storing and releasing ions to and from electrodes in an electrolyte. In the magnesium secondary battery 401 of FIG 4, an electrode group composed of a positive electrode 407, a negative electrode 408 and a separator 409 inserted between both electrodes is stored in a battery container 402 in a hermetically sealed state. The structure of the electrode group can take various shapes such as one laminated with paper strip-like electrodes illustrated in FIG. 4, or one wound in an arbitrary shape such as cylindrical shape or flat shape. The shape of the battery container may be selected from a cylindrical-type, flat oval-type, square-type or the like, corresponding to the shape of the electrode group.

The separator 409 is inserted also between the electrode arranged at the end of the electrode group and the battery container 402, so that the positive electrode 407 and the negative electrode 408 do not make a short circuit through the battery container 402. An electrolytic solution is held at the surfaces and inside of fine pores of the separator 409 and each of the electrodes 407 and 408.

A lid 403 is located at the upper part of the battery container 402, and a positive electrode external terminal 404, a negative electrode external terminal 405 and a liquid poring port 406 are provided at the lid 403. After storing the electrode group in the battery container 402, the lid 403 is covered on the battery container 402, and the exterior peripheral of the lid 403 is welded to be integrated with the battery container 402. Attachment of the lid 403 to the battery container 402 can be performed by adopting other methods such as caulking, adhesion, in addition to welding.

The upper part of the electrode group is electrically connected to the exterior terminal via lead wires. The positive electrode 407 is connected to the positive electrode external terminal 404 via a positive electrode lead wire 410. The negative electrode 408 is connected to the negative electrode external terminal 405 via a negative electrode lead wire 411. It should be noted that the lead wires 410, 411 can adopt an arbitrary shape such as a wire-type or a plate-type. The shape and material of the lead wires 410, 411 are arbitrary, as long as they are structures enabling to decrease ohm loss when current is flown, and the materials not to react with the electrolytic solution.

In addition, between the positive electrode external terminal 404 or the negative electrode external terminal 405, and the battery container 402, an insulating seal material 412 is inserted, so that both terminals do not make a short circuit. As the insulating seal material 412, any one may be selected from a fluorocarbon resin, a thermosetting resin, a glass hermetic seal or the like, and an arbitrary material can be used which does not react with the electrolytic solution, and is superior in air tightness.

By installing a current interruption mechanism utilizing a resistance element having PTC (Positive Temperature Coefficient), in the middle of the positive electrode lead wire 410 or the negative electrode lead wire 410, or at the connection part of the positive electrode lead wire 410 and the positive electrode external terminal 404, or at the connection part of the negative electrode lead wire 411 and the negative electrode external terminal 405, it becomes possible to stop the charge-discharge of the magnesium secondary battery 401 to protect the battery, when temperature inside the battery becomes high. It should be noted that the lead wires 410, 411 can take an arbitrary shape such as a foil-type or a plate-type.

(Positive electrode material)

The positive electrode 407 can be formed by mixing an electrical conductive material and a binder into a powder of the above positive electrode active material for the secondary battery to prepare a paste-like positive electrode mixture, and by coating this positive electrode mixture on the surface of the positive electrode collector. The electrical conductive material is to secure electric conductivity of the positive electrode, and a carbon material with a high specific surface area, for example, carbon black or activated carbon, can be used. In addition, carbon grown in a vapor phase, or fiber manufactured by carbonization at high temperature using a pitch (byproducts of petroleum, coal, coal tar or the like) as a raw material, an electric conductive fiber such as carbon fiber manufactured from acrylic fiber (polyacrylonitrile) can also be used as the electric conductive material. It is preferable to use the carbon material having high specific surface area along with carbon fiber. The carbon material having high specific surface area acts in an auxiliary way to the electric conductivity between the positive electrode active material and the electric conductive fiber, and enhances the electric conductivity further as compared with the case only the electric conductive fiber is used.

In addition, use of a metal material, which is a material not soluble by oxidation in a charge-discharge range of the positive electrode, and having a lower electric resistance than the positive electrode active material, is also possible. For example, there is exemplified a corrosion-resistant metal such as titanium or gold; carbide such as SiC or WC; a nitride such as $Si_3N_4$ or BN. As a manufacturing method for these electric conductive materials, a conventional manufacturing method such as a melting method, a chemical vapor phase growth method can be utilized. One obtained by mixing one or two more kinds of the above electric conductive materials can be used.

As a binder for holding the positive electrode active material and the electric conductive material on the surface of a foil of the positive electrode collector, there can be used a known material such as a fluorine-containing resin such as Teflon (registered trade mark), polytetrafluoroethylene, polyvinylidenefluoride, fluororubber, a thermoplastic resin such as polypropylene, polyethylene, or the like.

The positive electrode mixture may be added with additives (for example, an organic solvent such as N-methyl-2-pyrrolidone, or carboxylmethylcellulose) to adjust dispersing performance or viscosity according to convenience in coating.

The positive electrode collector is not especially limited to its material, shape, manufacturing method or the like, and arbitrary collector can be used. As the positive electrode collector, aluminum foil having a thickness of 10 to 100 $\mu$m, aluminum foil with punched holes with a thickness of 10 to 100 $\mu$m and a hole diameter of 0.1 to 10 mm, an expanded metal, a foamed metal sheet or the like are used. As a material of the positive electrode collector, stainless steel, titanium or the like is also applicable in addition to aluminum.

For coating of the positive electrode mixture, there can be adopted an already known method such as a doctor blade method, a dipping method, a spraying method, and the means thereof is not limited. The positive electrode thus formed by coating is a sheet-like one, and the sheet-like positive electrode can take various thicknesses depending on the battery shape to be manufactured, as well as take various sizes by means of cutting or the like. In addition, as needed, to increase the density of the positive electrode mixture, it may be pressurized by means of press or the like. In this case, particle diameter of the positive electrode active material is specified so as to be equal to or smaller than thickness of the mixture layer. In the case where rough particles having a size of equal to or larger than the thickness of the mixture layer are present in the positive electrode active material powder, particles with a size equal to or smaller than the thickness of the mixture layer are prepared by sieve classification or air flow classification or the like in advance, to remove the rough particles.

(Negative electrode material)

An active material constituting the negative electrode 408 facing the positive electrode is not especially limited in view of kind thereof. It may be any one as long as it is capable of storing and releasing (or dissolving and depositing) magnesium reversibly, and having lower reaction potential than that of the positive electrode active material for the secondary battery.

As a material having sufficiently low reaction potential and sufficient and reversible storing and releasing (or dissolving and depositing) capability, metal magnesium and a magnesium alloy are included, and in the magnesium secondary battery of the present invention, it is desirable to use these metal magnesium and magnesium alloy as the negative electrode active material. As the magnesium alloy, specifically, a Mg-Al-type alloy, a Mg-Zn-type alloy, a Mg-Mn-type alloy, or the like may be used.

In the case of using the metal magnesium or the magnesium alloy as the negative electrode active material, for example, a material of metal magnesium or the like may be formed in a foil-type or a plate-type shape, to prepare the negative electrode, and to constitute a battery facing the above positive electrode. In this case, for example, a clad material in which the magnesium alloy and a copper alloy are bonded can also be used.

(Separator)

The separator 409 is the one to separate the positive electrode and the negative electrode to hold the electrolytic solution. In the case of using a non-aqueous electrolytic solution, a separator, non-woven fabric and paper, or the like, with a multi-layer structure obtained by welding a polyolefin-type polymer sheet composed of such as polyethylene and polypropylene, or a fluorocarbon-type polymer sheet represented by a polyolefin-type polymer and a tetrafluoropolyethylene, may be used.

In the case of the aqueous electrolytic solution, non-woven fabric, paper or the like may be used. Because these separators are required to permeate magnesium ions in the charge-discharge of the battery, if, generally, as long as the fine pore diameter is 0.01 to 10 $\mu$m, and an air void ratio is 20 to 90%, it is applicable to the magnesium secondary battery 401.

In addition, a mixture of a ceramics and a binder may be formed in thin layer state on the surface of the separator, so that the separator will not shrink when battery temperature becomes high.

(Electrolytic solution)

The electrolytic solution is a liquid containing magnesium in an ion state which becomes a carrier, and the one dissolved with a magnesium salt which becomes a supporting electrolyte in a solvent. In the magnesium secondary battery of the present invention, a battery can be constituted by any of the non-aqueous electrolytic solution using an organic solvent, and the aqueous electrolytic solution using water as a solvent.

In preparing the non-aqueous electrolytic solution, $Mg(BF_4)_2$, $Mg(PF_6)_2$, $Mg(ClO_4)_2$, $Mg(CF_3SO_3)_2$, $Mg(AsF_6)_2$ or the like can be used, as the magnesium salt which becomes the supporting electrolyte.

In addition, as the organic solvent, an aprotic organic solvent can be used. For example, there can be used a mixed solvent composed of one kind or two or more kinds of a cyclic carbonate, a chain carbonate, a cyclic ester, a cyclic ether, or a chain ether or the like. An example of the cyclic carbonate includes ethylene carbonate, propylene carbonate, butylene carbonate, vinylene carbonate or the like; an example of the chain carbonate includes dimethyl carbonate, diethyl carbonate, methylethyl carbonate, or the like; an example of the cyclic ester includes γ-butyrolactone, γ-valerolactone or the like; an example of the cyclic ether includes tetrahydrofran, 2-methyltetrahydrofran or the like; an example of the chain ether includes dimetoxyethan, ethylene glycol dimethyl ether or the like. Among these, any one kind may be used alone, or two or more kinds may be used by mixing. Concentration of the supporting electrolyte in the non-aqueous electrolytic solution is desirably set at 0.8 to 1.5 M. Too low concentration decreases the electric conductivity, while too high concentration provides too high viscosity, which deteriorates low temperature characteristics.

In preparing the aqueous electrolytic solution, $Mg(OH)_2$, $MgCl_2$, $Mg(NO_3)_2$ or the like may be used as the magnesium salt, which becomes the supporting electrolyte. It is preferable to use $Mg(OH)_2$, among the above supporting electrolytes, in the negative electrode using the metal magnesium and the magnesium alloy as the negative electrode active material, because it has an advantage of being capable of preventing deterioration (oxidation) of the negative electrode. In the case of the aqueous electrolytic solution, it is desirable to adopt the saturation concentration or a concentration close to that, because the concentration of the supporting electrolyte can increase the electric conductivity of the electrolytic solution.

A merit of using the non-aqueous type electrolytic solution is that the magnesium secondary battery can attain battery voltage over a decomposition potential of water, and thus provides the magnesium secondary battery with a high power density. When considering utilizing this merit, in the magnesium secondary battery of the present invention, it is desirable to use the non-aqueous type electrolytic solution. It should be noted that in the case of the magnesium secondary battery using the metal magnesium for the negative electrode, charge-discharge is possible between about 1.1 V to about 3.0 V when using the non-aqueous type electrolytic solution, while charge-discharge is possible between about 1.1 V to about 1.6 V when using the aqueous type electrolytic solution.

Explanation will be given below in further detail with reference to Examples. However, the present invention should not be limited to description of Examples described here, and they may be used in combination as appropriate.

[EXAMPLES]

(Preparation of oxide glass)

Table 1 represents the glass composition prepared and investigated.

Any of the components was represented in % by mass converted to an oxide. Raw materials of each component are vanadium pentoxide, phosphorous pentoxide, ferric oxide, manganese dioxide, argentous oxide, cuprous oxide, cobalt oxide, nickel oxide, tungsten oxide and boron oxide. As for lithium, sodium and potassium, lithium carbonate, sodium carbonate, and potassium carbonate were used, respectively. As for fluorine, chlorine, iodine and sulfur to be contained in glass, lithium fluoride, silver chloride, copper iodide and lithium sulfide were used, respectively.

Preparation of the oxide glass was performed under the following procedure.

300 g of mixed powder in which raw material compounds were compounded and mixed to become the composition of Table 1 was fed into a platinum crucible, and heated to the heating temperature described in Table 1 using an electric furnace, respectively, at a temperature raising rate of 5 to 10°C/min, and held for two hours. During the holding period, stirring was continued to attain uniform glass. Next, the platinum crucible was taken out from the electric furnace, and the content was poured onto a stainless steel plate heated at 200 to 300°C in advance to obtain oxide glass.

[Table 1]

| No. | Glass composition (wt. %) | | | | | | | | | | | | | | | | | | | Heating temperature (°C) | |
|---|---|---|---|---|---|---|---|---|---|---|---|---|---|---|---|---|---|---|---|---|---|
| | $V_2O_5$ | $Li_2O$ | $Na_2O$ | $K_2O$ | $Ag_2O$ | $Cu_2O$ | MgO | CaO | $P_2O_5$ | $Fe_2O_3$ | $MnO_2$ | CoO | NiO | $WO_3$ | $B_2O_3$ | LiF | $Li_2S$ | CuI | AgCl | | |
| 1-1 | 78 | 3 | | | | | | | 9 | 10 | | | | | | | | | | 1000 | Comparative Example |
| 1-2 | 77 | 4 | | | | | | | 8 | 11 | | | | | | | | | | 1000 | Comparative Example |
| 1-3 | 80 | 2 | | | | | | | 8 | 10 | | | | | | | | | | 1000 | Example |
| 1-4 | 81 | 2 | | | | | | | 8 | 9 | | | | | | | | | | 1000 | Comparative Example |
| 1-5 | 79 | 2 | | | | | | | 9 | 10 | | | | | | | | | | 1000 | Example |
| 1-6 | 83 | 2 | | | | | | | 9 | | 6 | | | | | | | | | 1000 | Example |
| 1-7 | 80 | 2 | | | | | | | 8 | | 10 | | | | | | | | | 1000 | Example |
| 1-8 | 72 | 1 | | | | | | | 13 | 10 | 4 | | | | | | | | | 1000 | Example |
| 1-9 | 77 | 3 | | | | | | | 12 | 8 | | | | | | | | | | 1000 | Example |
| 1-10 | 68 | 2 | | | | | | | 14 | 16 | | | | | | | | | | 1000 | Example |
| 1-11 | 76 | | 2 | | | | | | 10 | 10 | 2 | | | | | | | | | 1000 | Example |
| 1-12 | 66 | | | 11 | | | | | 12 | 8 | 3 | | | | | | | | | 1000 | Example |
| 1-13 | 72 | | 9 | | | | | | 7 | 10 | | | | | | | | | | 1000 | Example |
| 1-14 | 74 | | | | | 9 | | | 8 | 9 | | | | | | | | | | 1000 | Example |
| 1-15 | 59 | | | | | 15 | | | 12 | 14 | | | | | | | | | | 1000 | Example |
| 1-16 | 72 | | | | | | | | 10 | 14 | 4 | | | | | | | | | 1000 | Example |
| 1-17 | 78.6 | 2.3 | | | | | | | 9 | 10.1 | | | | | | | | | | 1000 | Example |
| 1-18 | | 5 | | | | | | | 25 | | | | | 70 | | | | | | 1350 | Comparative Example |
| 1-19 | 83.8 | 2.2 | | | | | | | 8 | 4 | | 2 | | | | | | | | 1050 | Example |
| 1-20 | 83.8 | 2.2 | | | | | | | 8 | 4 | | | 2 | | | | | | | 1050 | Example |
| 1-21 | 78 | 2 | | | | | | | 10 | | | | | 10 | | | | | | 1100 | Example |
| 1-22 | 78 | 2 | | | | | | | 12 | | | | | | 8 | | | | | 1100 | Example |
| 1-23 | 50 | | | | | 32.7 | | | 9.2 | 8.1 | | | | | | | | | | 1100 | Example |
| 1-24 | 37.9 | | | | | | 48.9 | | 7 | 6.2 | | | | | | | | | | 1100 | Example |
| 1-25 | 61.2 | | | | | | | 17.7 | 11.2 | 10 | | | | | | | | | | 1100 | Example |
| 1-26 | 58.2 | | | | | | | | 10.6 | 9.5 | | | | | 21.7 | | | | | 1100 | Example |
| 1-27 | 80.2 | | | | | | | | 8 | 10 | | | | | | 1.8 | | | | 900 | Example |
| 1-28 | 79.2 | | | | | | | | 7.9 | 9.9 | | | | | | | 3 | | | 900 | Example |
| 1-29 | 71.9 | | | | | | | | 7.8 | 8.7 | | | | | | | | 11.6 | | 900 | Example |
| 1-30 | 68.9 | | | | | | | | 12.5 | 8.4 | 3.1 | | | | | | | | 7.1 | 900 | Example |
| 1-31 | 72.5 | 1.5 | | | | | | | 18 | 8 | | | | | | | | | | 1100 | Comparative Example |
| 1-32 | 69.5 | 1.5 | | | | | | | 21 | 8 | | | | | | | | | | 1100 | Comparative Example |

(Deposition of the crystallite)

Oxide glass represented in Table 1 was processed to a size of 10× 10×4 mm to prepare a test piece. This sample plate was put on an alumina substrate and heated in the electric furnace at 250˚C for 50 hours for No. 1-4 and No. 1-18, while heated at 420˚C for 50 hours for oxide glasses excluding No. 1-4 and No. 1-18 to deposit the crystallite in the oxide glass.

(Observation of the amorphous phase)

Next, observation and composition analysis of the crystallite and the amorphous phase were performed using a SEM-EDX. Here, SEM is the abbreviation of Scanning Electron Microscope, and EDX is the abbreviation of Energy Dispersive X-ray Spectrometer.

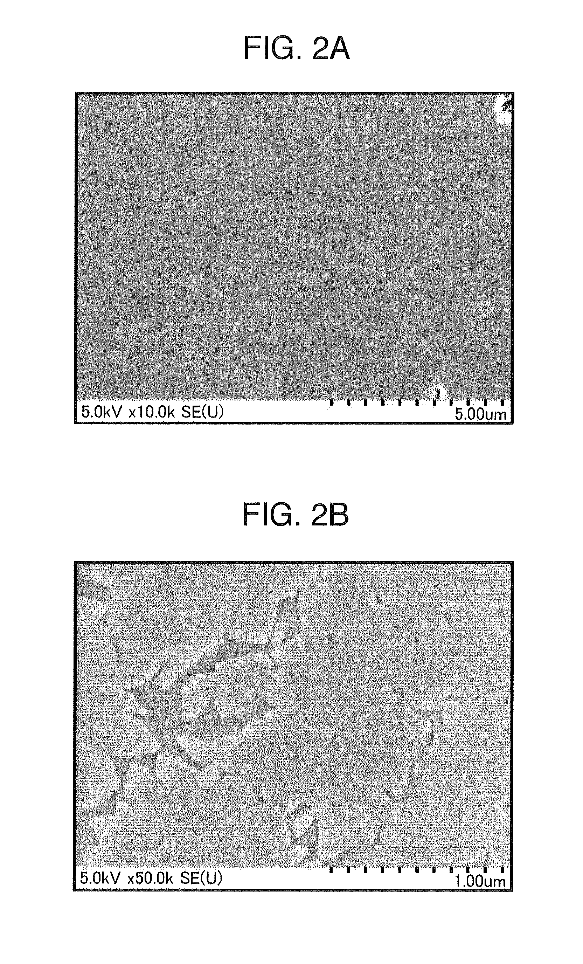

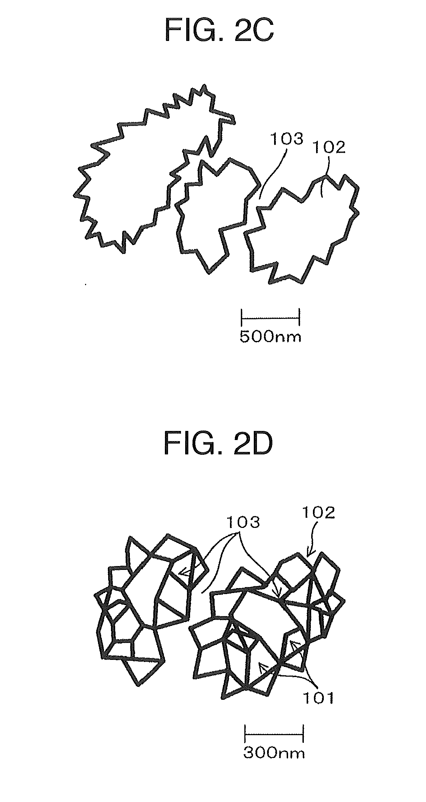

FIG 2A is a SEM image of No. 1-3 where the crystallites were deposited. FIG. 2B is a further magnified image of FIG 2A. In addition, FIG 2C is a schematic drawing of a SEM image of FIG 2A, and FIG 2D is a schematic drawing of a SEM image of FIG 2B.

In FIGS 2A and 2B, it is understood that the primary particle 101 of the crystal aggregated and formed the secondary particle 102 having a shape like grape bunch, and the amorphous phase 103 is formed at the grain boundary of this secondary particle 102. From FIGS. 2B and 2D, it is understood that a fine amorphous phase 103 is formed at the grain boundary of the primary particle 101 of the crystal.

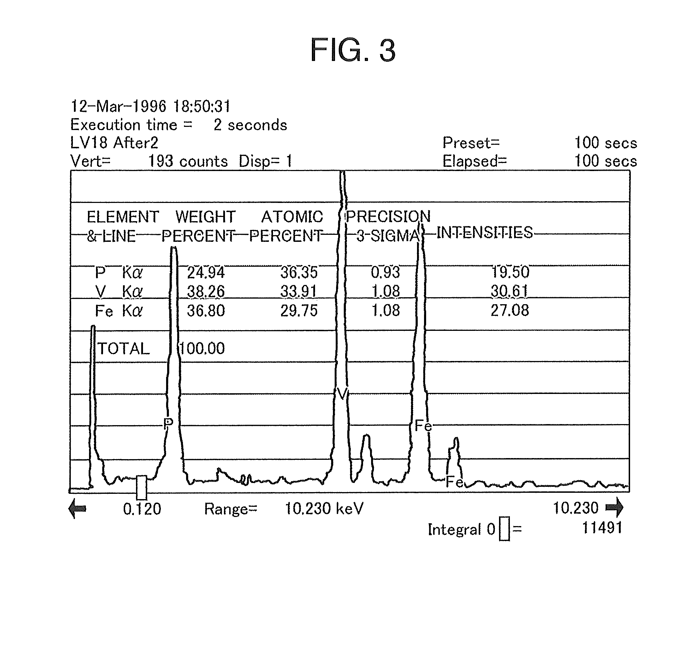

In addition, FIG 3 is a composition analysis result obtained by performing the SEM-EDX analysis on one portion of the amorphous phase shown in the SEM image of FIG 2B.

From FIG 3, it is understood that the transition metals contained in the amorphous phase of No. 1-3 deposited with the crystallite are vanadium and iron, and the ratio of vanadium and iron contained in the amorphous phase relative to phosphorous can be determined in atomic number standard (atomic ratio) by the following calculation equation.

[MATH. 1]

$$\frac{\text{(Atomic number of the transition metals)}}{\text{(Atomic number of phosphorous)}} = \frac{\text{(Atomic number of V)} + \text{(Atomic number of Fe)}}{\text{(Atomic number of phosphorous)}}$$

$$= \frac{33.91 + 29.75}{36.35} = 1.75 \approx 1.8$$

--- Equation (1)

From the above Equation (1), it is understood that the ratio of vanadium and iron contained in the amorphous phase of No. 1-3 deposited with the crystallite relative to phosphorous is 1.8 in a ratio (atomic ratio).

The SEM-EDX analysis was performed similarly on samples listed in Table 1 to identify the transition metals contained in the amorphous phase. In addition, as for samples in which phosphorous was detected in the amorphous phase, the ratio (atomic ratio) of vanadium, iron, manganese, nickel and cobalt contained in the amorphous phase, relative to phosphorous, was measured.

(Evaluation of the crystallite)

Next, the samples listted in Table 1 were pulverized to powder with an average particle diameter (D50) of 5 μm to evaluate the crystal state of powder obtained. Crystallization ratio was measured using a wide-angle X-ray diffraction device (RINT 2500HL, manufactured by Rigaku Corp.) to identify the crystal and measure the diameter of the crystallite. Conditions to identify the crystal and measure the crystallization ratio are as follows.

An X-ray source was Cu, and power thereof was set at 50 kV and 250 mA. A focusing optical system equipped with a monochromator was used, and a divergence slit, a receiving screen and a scattering slit were selected at 0.5 deg, 0.15 mm and 0.5 deg, respectively. A scanning axis of X-ray diffraction was a $2\theta/\theta$ interlock-type, and a range of $5 \le 2\theta \le 100$ deg by continuous scanning was measured under condition of a scanning rate of 1.0 deg/min and a sampling of 0.01 deg.

The crystallization ratio was calculated from the ratio of a hollow derived from the amorphous phase and a diffraction peak derived from the crystal. This ratio is considered to represent the volume ratio of the amorphous phase and the crystallite.

It should be noted that the diffraction peak derived from the crystal is not detected from the measurement principle when the crystallite contained in the measurement sample is too small. A wide-angle X-ray diffraction device used in the analysis of Example does not detect the diffraction peak derived from the crystal when the size of the crystallite (crystallite diameter) contained in the measurement sample is 5 nm or less. Accordingly, even when the crystallization ratio of the measurement sample is 0%, it does not necessarily mean that the measurement sample does not contain the crystallite.

Identification of the crystal was performed on the crystal deposited in a material, using an ICDD data, which is a standard data collection of X-ray diffraction. Major crystals identified were $V_2O_5$ crystal, $Li_{0.3}V_2O_5$ crystal, $Na_{0.287}V_2O_5$ crystal, $Ag_{0.33}V_2O_5$ crystal, $K_{0.33}V_2O_5$ crystal, $Cu_{0.261}V_2O_5$ crystal, $Cu_{0.41}V_2O_5$ crystal, $Fe_{0.33}3V_2O_5$ crystal, $Fe_2V_4O_{13}$ crystal, $CaV_2O_6$ crystal, and $Ca_{0.17}V_2O_5$ crystal.

In addition, the $V_2O_5$ crystal among the above crystals belongs to the orthorhombic system, however others belong to the monoclinic system.

Diameter of the crystallite was obtained by adopting, as a detected main peak, a diffraction peak having the highest peak intensity among diffraction peaks derived from the crystals identified. The diameter of the crystallite was calculated using a (001) plane for $V_2O_5$ crystal; a (111) plane for $Li_{0.3}V_2O_5$ crystal, $Na_{0.287}V_2O_5$ crystal, $Ag_{0.33}V_2O_5$ crystal, $K_{0.33}V_2O_5$ crystal, $Cu_{0.261}V_2O_5$ crystal, $Cu_{0.41}V_2O_5$ crystal, and $Fe_{0.33}3V_2O_5$ crystal; a (002) plane for $Fe_2V_4O_{13}$ crystal; a (201) plane for $CaV_2O_6$ crystal; and a (200) plane for $Ca_{0.17}V_2O_5$ crystal, respectively.

The following is a measurement method for the diameter of the crystallite.

Detailed measurement was performed by narrow scanning at the angle at the vicinity of the detected main peak. In measurement of the narrow scanning, an integration scanning method was used. Scanning range was measured focusing on the vicinity of the detected main peak. From a half-value width of the detection main peak obtained by the narrow scanning, the diameter of the crystallite was calculated by the Scherrer equation.

Measurement results are represented in Table 2.

Here, in Table 1 and Table 2, samples having the same last two digits in sample numbers correspond to a glass composition of raw material and the positive electrode active material prepared by using that raw material. That is, for example, sample No. 1-1 of Table 1 corresponds to sample No. 2-1 of Table 2.

[Table 2]

| | | Crystallite | | Amorphous oxide phase | | |
|---|---|---|---|---|---|---|
| | Crystal rate | Main deposited crystal and crystal system | Crystallite diameter (nm) | Contained transition metal | Transition metal/P (atomic rate) | |
| 2-1 | 100% | $Li_{0.3}V_2O_5$ (monoclinic) | 61 | - | - | Comparative Example |
| 2-2 | 99% | $Li_{0.3}V_2O_5$ (monoclinic) | 29 | V, Fe | 1.3 | Comparative Example |
| 2-3 | 90% | $Li_{0.3}V_2O_5$ (monoclinic) | 69 | V, Fe | 1.8 | Example |
| 2-4 | 0% | - | 3 | V, Fe | 9.0 | Comparative Example |
| 2-5 | 90% | $Li_{0.3}V_2O_5$ (monoclinic) | 31 | V, Fe | 1.4 | Example |
| 2-6 | 88% | $Li_{0.3}V_2O_5$ (monoclinic) | 260 | V, Mn | 1.7 | Example |
| 2-7 | 92% | $Li_{0.3}V_2O_5$ (monoclinic) | 78 | V, Mn | 2.3 | Example |
| 2-8 | 85% | $Li_{0.3}V_2O_5$ (monoclinic) | 300 | V, Fe, Mn | 1.2 | Example |
| 2-9 | 94% | $Li_{0.3}V_2O_5$ (monoclinic) | 245 | V, Fe | 0.5 | Example |

(continued)

| | | Crystallite | | Amorphous oxide phase | | |
|---|---|---|---|---|---|---|
| | Crystal rate | Main deposited crystal and crystal system | Crystallite diameter (nm) | Contained transition metal | Transition metal/P (atomic rate) | |
| 2-10 | 68% | $Li_{0\,3}\,V_2O_5$ (monoclinic) | 33 | V, Fe | 2.8 | Example |
| 2-11 | 83% | $Na_{0\,287}\,V_2O_5$ (monoclinic) | 43 | V, Fe, Mn | 1.9 | Example |
| 2-12 | 89% | $Ag_{0\,33}\,V_2O_5$ (monoclinic) | 21 | V, Fe, Mn | 1.3 | Example |
| 2-13 | 81% | $K_{0\,33}\,V_2O_5$ (monoclinic) | 51 | V, Fe | 1.6 | Example |
| 2-141 | 85% | $Cu_{0\,261}\,V_2O_5$ (monoclinic) | 70 | V, Fe | 1.7 | Example |
| 2-15 | 82% | $Cu_{0\,41}\,V_2O_5$ (monoclinic) | 146 | V, Fe | 1.6 | Example |
| 2-16 | 82% | $Fe_{0\,33}\,V_2O_5$ (monoclinic) | 39 | V, Fe, Mn | 1.6 | Example |
| 2-17 | 91% | $Li_{0\,3}\,V_2O_5$ (monoclinic) | 55 | Fe | 1.0 | Example |
| 2-18 | 0% | - | 3 | W | 0.6 | Comparative Example |
| 2-19 | 90% | $Li_{0\,3}\,V_2O_5$ (monoclinic) | 60 | V, Fe, Co | 1.6 | Example |
| 2-20 | 90% | $Li_{0\,3}\,V_2O_5$ (monoclinic) | 60 | V, Fe, Ni | 1.6 | Example |
| 2-21 | 89% | $Li_{0\,3}\,V_2O_5$ (monoclinic) | 37 | V, Co | 2.0 | Example |
| 2-22 | 89% | $Li_{0\,3}\,V_2O_5$ (monoclinic) | 35 | V, Ni | 1.4 | Example |
| 2-23 | 87% | $Cu_{0\,41}\,V_2O_5$ (monoclinic) | 61 | V, Fe | 1.2 | Example |
| 2-24 | 65% | $V_2O_5$ (rhombic), $Fe_2V_4O_{13}$ (monoclinic) | 22 | V, Fe | 2.6 | Example |
| 2-25 | 90% | $CaV_2O_5$ (monoclinic), $Ca_{0\,17}\,V_2O_5$ (monoclinic) | 50 | V, Fe | 1.3 | Example |
| 2-26 | 80% | $V_2O_5$ (rhombic) | 13 | V, Fe | 1.7 | Example |
| 2-27 | 80% | $Li_{0\,3}\,V_2O_5$ (monoclinic) | 57 | V, Fe | 1.6 | Example |
| 2-28 | 74% | $Li_{0\,3}\,V_2O_5$ (monoclinic) | 46 | V, Fe | 2.7 | Example |

(continued)

| | | Crystallite | | Amorphous oxide phase | | |
|---|---|---|---|---|---|---|
| | Crystal rate | Main deposited crystal and crystal system | Crystallite diameter (nm) | Contained transition metal | Transition metal/P (atomic rate) | |
| 2-29 | 50% | $Cu_{0.261}V_2O_5$ (monoclinic) | 35 | V, Fe | 4.3 | Example |
| 2-30 | 73% | $Ag_{0.33}V_2O_5$ (monoclinic) | 14 | V, Fe | 2.8 | Example |
| 2-31 | 39% | $Li_{0.3}V_2O_5$ (monoclinic) | 9 | V, Fe | 5.8 | Comparative Example |
| 2-32 | 21% | $Li_{0.3}V_2O_5$ (monoclinic) | 12 | V, Fe | 5.7 | Comparative Example |

In Table 2, samples described as "Example" contain one or more kinds of metals of any of vanadium, iron, manganese, nickel and cobalt in the amorphous phase, and have a crystallization ratio of from 50% by volume to 94% by volume. Furthermore, in No. 2-3 to No. 2-17, and No. 2-19 to No. 2-32, which are Examples containing phosphorous, atomic ratio of vanadium, iron, manganese, nickel, and cobalt contained in the amorphous phase, relative to phosphorous, is 0.5 to 9.0.

Samples No. 2-4 and No. 2-18 had a crystallization ratio of 0%, calculated by the X-ray diffraction, however, it was confirmed with TEM observation that crystallites with an average crystallite diameter of 3 nm respectively were deposited. However, identification of the deposited crystal was not attained.

In addition, main crystals (main deposited crystal) contained in samples described as "Example" were $V_2O_5$ crystal, $Li_{0.3}V_2O_5$ crystal, $Na_{0.287}V_2O_5$ crystal, $Ag_{0.33}V_2O_5$ crystal, $K_{0.33}V_2O_5$ crystal, $Cu_{0.261}V_2O_5$ crystal, $Cu_{0.41}V_2O_5$ crystal, $Fe_{0.33}3V_2O_5$ crystal, $Fe_2V_4O_{13}$ crystal, $CaV_2O_6$ crystal, and $Ca_{0.17}V_2O_5$ crystal. The diameter of the crystallite is 300 nm or less.

On the other hand, samples not satisfying a constitution of the above Example were denoted by "Comparative Example".


(Evaluation of a battery)

Next, explanation will be given on evaluation of the magnesium secondary battery.

The positive electrode mixture whose viscosity was adjusted to 15 Pa·s was prepared, by mixing 10 parts by weight of Ketjen black as a conductive material, and 5 parts by weight of polyvinylidenefluoride (#7305, produced by Kureha Corp.) as a binder, into 85 parts by weight of powder adjusted to an average particle diameter (D50) of 5 $\mu$m by pulverization, and furthermore adding N-methyl-2-pyrrolidone. This positive electrode mixture was coated on both faces of an aluminum foil collector with a thickness of 20 $\mu$m to prepare a sheet by pressure molding so as to obtain a thickness of the positive electrode mixture of 50 $\mu$m on one face, followed by cutting this sheet, so that the area of the coated part becomes 50 mm×100 mm, and an uncoated part becomes 15 mm×15 mm as an extraction electrode, to prepare an electrode.

As the negative electrode facing to the above positive electrode, a magnesium alloy (A1: 6% by weight) was used. They were cut so as to be 60 mm×110 mm, leaving an extraction electrode part (15 mm×15 mm) to prepare the one whose coated part of the positive electrode was sufficiently covered.

As the separator to be inserted between the positive electrode and the negative electrode, non-woven fabric with a thickness of 100 $\mu$m was used. As for the magnesium secondary battery, while inserting the above separator between the positive electrode and the negative electrode, 11 pieces of the negative electrodes and 10 pieces of the positive electrodes were laminated alternately. This laminated positive electrode and negative electrode, along with the separator, were put in a laminated cell, and the electrolytic solution was poured in, and extraction electrodes were installed so that the positive electrode and the negative electrode can be electrically connected from the exterior of the laminated cell. Next, the laminated cell was sealed to complete a laminated-cell-type magnesium secondary battery.

It should be noted that as the electrolytic solution, acetonitrile was used as the solvent, and $Mg(ClO_4)_2$ was used as the electrolyte by dissolving in a concentration of 1 mol/L, to be used as the non-aqueous electrolytic solution.

A charge-discharge test was performed as for the above magnesium secondary battery. As the charge-discharge test, charge-discharge cycles were repeated by charging up to a charge completion voltage of 3.0 V, under constant current with a current density of 0.3 mA/cm$^2$, and then by discharging down to a discharge completion voltage of 0.3 V, under constant current with a current density of 0.3 mA/cm$^2$, to measure initial capacity and cycle retention rate after 50 cycles.

Results of battery evaluation are represented in Table 3.

In this Table, as for the judgment of battery characteristics, the one having the initial capacity of below 200 mAh/g was marked by "×", and the one 200 mAh/g or more was marked by "○". In addition, as for the cycle retention rate, below 80% was marked by "×", and 80% or higher was marked by "○".

[Table 3]

| | Crystallite | | | Amorphous oxide phase | | | | | |
|---|---|---|---|---|---|---|---|---|---|
| | Crystal rate | Main deposited crystal and crystal system | Crystallite diameter (nm) | Contained transition metal | Transition metal/P (atomic ratio) | Initial capacity (mAh/g) | Cycle retention rate | Judgment | |
| 2-1 | 100% | $Li_{0.3}V_2O_5$ (monoclinic) | 61 | - | - | 234 | 25% | × | Comparative Example |
| 2-2 | 99% | $Li_{0.3}V_2O_5$ (monoclinic) | 29 | V, Fe | 1.3 | 259 | 28% | × | Comparative Example |
| 2-3 | 90% | $Li_{0.3}V_2O_5$ (monoclinic) | 69 | V, Fe | 1.8 | 327 | 85% | ○ | Example |
| 2-4 | 0% | - | 3 | V, Fe | 9.0 | 154 | 92% | × | Comparative Example |
| 2-5 | 90% | $Li_{0.3}V_2O_5$ (monoclinic) | 31 | V, Fe | 1.4 | 321 | 88% | ○ | Example |
| 2-6 | 88% | $Li_{0.3}V_2O_5$ (monoclinic) | 260 | V, Mn | 1.7 | 326 | 87% | ○ | Example |
| 2-7 | 92% | $Li_{0.3}V_2O_5$ (monoclinic) | 78 | V, Mn | 2.3 | 312 | 85% | ○ | Example |
| 2-8 | 85% | $Li_{0.3}V_2O_5$ (monoclinic) | 300 | V, Fe, Mn | 1.2 | 301 | 87% | ○ | Example |
| 2-9 | 94% | $Li_{0.3}V_2O_5$ (monoclinic) | 245 | V, Fe | 0.5 | 331 | 86% | ○ | Example |
| 2-10 | 68% | $Li_{0.3}V_2O_5$ (monoclinic) | 33 | V, Fe | 2.8 | 318 | 89% | ○ | Example |
| 2-1 | 83% | $Na_{0.287}V_2O_5$ (monoclinic) | 43 | V, Fe, Mn | 1.9 | 286 | 90% | ○ | Example |
| 2-12 | 89% | $Ag_{0.33}V_2O_5$ (monoclinic) | 21 | V, Fe, Mn | 1.3 | 269 | 93% | ○ | Example |
| 2-13 | 81% | $K_{0.33}V_2O_5$ (monoclinic) | 51 | V, Fe | 1.6 | 279 | 87% | ○ | Example |

(continued)

| | Crystallite | | | Amorphous oxide phase | | | | | |
| --- | --- | --- | --- | --- | --- | --- | --- | --- | --- |
| | Crystal rate | Main deposited crystal and crystal system | Crystallite diameter (nm) | Contained transition metal | Transition metal/P (atomic ratio) | Initial capacity (mAh/g) | Cycle retention rate | Judgment | |
| 2-14 | 85% | $Cu_{0.261} V_2O_5$ (monoclinic) | 70 | V, Fe | 1.7 | 297 | 86% | ○ | Example |
| 2-15 | 82% | $Cu_{0.41} V_2O_5$ (monoclinic) | 146 | V, Fe | 1.6 | 285 | 87% | ○ | Example |
| 2-16 | 82% | $Fe_{0.33} V_2O_5$ (monoclinic) | 39 | V, Fe, Mn | 1.6 | 289 | 88% | ○ | Example |
| 2-17 | 91% | $Li_{0.3} V_2O_5$ (monoclinic) | 55 | Fe | 1.0 | 299 | 85% | ○ | Example |
| 2-18 | 0% | - | 3 | w | 0.6 | 50 | 79% | × | Comparative Example |
| 2-19 | 90% | $Li_{0.3} V_2O_5$ (monoclinic) | 60 | V, Fe, Co | 1.6 | 286 | 87% | ○ | Example |
| 2-20 | 90% | $Li_{0.3} V_2O_5$ (monoclinic) | 60 | V, Fe, Ni | 1.6 | 292 | 87% | ○ | Example |
| 2-21 | 89% | $Li_{0.3} V_2O_5$ (monoclinic) | 37 | V, Co | 2.0 | 296 | 86% | ○ | Example |
| 2-22 | 89% | $Li_{0.3}V_2O_5$ (monoclinic) | 35 | V, Ni | 1.4 | 284 | 86% | ○ | Example |
| 2-23 | 87% | $Cu_{0.41} V_2O_5$ (monoclinic) | 61 | V, Fe | 1.2 | 301 | 88% | ○ | Example |
| 2-24 | 65% | $V_2O_5$ (rhombic), $Fe_2 V_4O_{13}$ (monoclinic) | 22 | V, Fe | 2.6 | 214 | 85% | ○ | Example |
| 2-25 | 90% | $CaV_2O_5$ (monoclinic), $Ca_{0.17} V_2O_5$ (monoclinic) | 50 | V, Fe | 1.3 | 345 | 89% | ○ | Example |

(continued)

| | Crystallite | | | Amorphous oxide phase | | | | | |
|---|---|---|---|---|---|---|---|---|---|
| | Crystal rate | Main deposited crystal and crystal system | Crystallite diameter (nm) | Contained transition metal | Transition metal/P (atomic ratio) | Initial capacity (mAh/g) | Cycle retention rate | Judgment | |
| 2-26 | 80% | $V_2O_5$ (rhombic) | 13 | V, Fe | 1.7 | 230 | 85% | ○ | Example |
| 2-27 | 80% | $Li_{0.3}V_2O_5$ (monoclinic) | 57 | V, Fe | 1.6 | 309 | 90% | ○ | Example |
| 2-28 | 74% | $Li_{0.3}V_2O_5$ (monoclinic) | 46 | V, Fe | 2.7 | 330 | 90% | ○ | Example |
| 2-29 | 50% | $Cu_{0.261}V_2O_5$ (monoclinic) | 35 | V, Fe | 4.3 | 338 | 92% | ○ | Example |
| 2-30 | 73% | $Ag_{0.33}V_2O_5$ (monoclinic) | 14 | V, Fe | 2.8 | 278 | 92% | ○ | Example |
| 2-31 | 39% | $Li_{0.3}V_2O_5$ (monoclinic) | 9 | V, Fe | 5.8 | 169 | 92% | × | Comparative Example |
| 2-32 | 21% | $Li_{0.3}V_2O_5$ (monoclinic) | 12 | V, Fe | 5.7 | 142 | 92% | × | Comparative Example |

In Table 3, No. 2-18 not containing vanadium, iron, manganese, nickel and cobalt in the amorphous phase, has a low initial capacity and a low cycle retention rate. In addition, No. 2-1 having a crystallization ratio of 100%, and No. 2-2, having a crystallization ratio of 99%, have large initial capacities but low cycle retention rates.

On the contrary, any of Examples (No. 2-3 to 2-17, No. 2-19 to 2-30) listed in Table 3 had initial capacities of 200 mAh/g or higher, and cycle retention rates of 80% or higher.

In addition, among Examples, those deposited with the monoclinic crystal showed to have higher capacities than those (No. 2-24 and No. 2-26) deposited with the orthorhombic crystal, $V_2O_5$ crystal. Furthermore, Examples (No. 2-27 to 2-30), using fluoride, chloride, iodide and sulfide as raw material, showed cycle retention rates of 90% or higher, and are particularly superior.

As understood from above, in Examples, both the crystal phase and the amorphous phase play important roles, and it is important for both to exist in the suitable ratios.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A positive electrode active material for a secondary battery comprising a crystal phase and an amorphous phase (103a, 103b), wherein the crystal phase is an oxide comprising vanadium for storing and releasing magnesium.

2. The positive electrode active material for the secondary battery according to claim 1, wherein the crystal phase has a structure formed with aggregation of a plurality of crystallites (101), and the amorphous phase (103 a, 103b) exists at a grain boundary of the crystallites (101).

3. The positive electrode active material for the secondary battery according to claim 1 or 2, wherein a volume ratio of the crystal phase is 50% or higher and below 94%.

4. The positive electrode active material for the secondary battery according to any one of claim 1 to claim 3, wherein the crystal phase is a monoclinic vanadium composite oxide.

5. The positive electrode active material for the secondary battery according to claim 4, wherein the vanadium composite oxide comprises at least one kind selected from lithium, sodium, potassium, copper, silver, calcium, magnesium and iron.

6. The positive electrode active material for the secondary battery according to claim 2, wherein an average crystallite size of the crystallites (101) is 300 nm or less.

7. The positive electrode active material for the secondary battery according to any one of claim 1 to claim 6, wherein the amorphous phase (103a, 103b) comprises phosphorous.

8. The positive electrode active material for the secondary battery according to claim 7, wherein the amorphous phase (103a, 103b) further comprises at least one kind selected from iron, molybdenum, tungsten, calcium, lithium, sodium, potassium, silver, copper, magnesium, manganese, nickel, sulfur, fluorine, chlorine and iodine.

9. The positive electrode active material for the secondary battery according to claim 8, wherein a content of vanadium, iron, manganese, nickel and cobalt in the amorphous phase (103a, 103b) is 0.5 to 9.0 in atomic ratio, relative to a content of phosphorous in the amorphous phase (103a, 103b).

10. A magnesium secondary battery comprising a positive electrode (407) having the positive electrode active material for the secondary battery according to any one of claim 1 to claim 9, a negative electrode (408) which is capable of reversibly storing and releasing magnesium, and an electrolytic solution comprising magnesium.

11. The magnesium secondary battery (401) according to claim 10, wherein the negative electrode (408) is a magnesium alloy.

# FIG. 1A

# FIG. 1B

# FIG. 2A

5.0kV x10.0k SE(U)    5.00um

# FIG. 2B

5.0kV x50.0k SE(U)    1.00um

FIG. 2C

FIG. 2D

# FIG. 3

12-Mar-1996 18:50:31
Execution time =   2 seconds
LV18 After2                                    Preset=              100 secs
Vert=      193 counts  Disp= 1                  Elapsed=             100 secs

| ELEMENT & LINE | WEIGHT PERCENT | ATOMIC PERCENT | PRECISION 3-SIGMA | INTENSITIES |
|---|---|---|---|---|
| P  Kα | 24.94 | 36.35 | 0.93 | 19.50 |
| V  Kα | 38.26 | 33.91 | 1.08 | 30.61 |
| Fe Kα | 36.80 | 29.75 | 1.08 | 27.08 |
| TOTAL | 100.00 | | | |

0.120      Range=    10.230 keV                         10.230

Integral 0 ☐ =      11491

# FIG. 4

## EUROPEAN SEARCH REPORT

Application Number

EP 11 19 4656

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P<br><br>L | EP 2 270 904 A2 (HITACHI POWDERED METALS [JP]; HITACHI LTD [JP])<br>5 January 2011 (2011-01-05)<br>* paragraph [0018] - paragraph [0020] *<br>* paragraph [0064] - paragraph [0067]; tables 1,2,3 *<br>* paragraph [0093] - paragraph [0099]; figures 3,4 * | 1-9 | INV.<br>H01M4/54<br>H01M4/58<br>H01M4/485<br>H01M4/525<br>H01M4/131<br>H01M4/136<br>H01M10/054 |
| X,P<br><br>L | WO 2011/125834 A1 (HITACHI CHEMICAL CO LTD [JP]; HITACHI LTD [JP]; HASHIBA YUJI [JP]; YOS) 13 October 2011 (2011-10-13)<br>* the whole document * | 1-9 | |
| X,P | EP 2 270 916 A2 (FUJI HEAVY IND LTD [JP])<br>5 January 2011 (2011-01-05)<br>* paragraph [0012] - paragraph [0015] *<br>* paragraph [0028] - paragraph [0030] *<br>* tables 1-3 * | 1-9 | |
| X<br><br>Y | EP 0 634 803 A1 (HONDA MOTOR CO LTD [JP])<br>18 January 1995 (1995-01-18)<br>* column 3, line 26 - column 5, line 31 *<br>* column 8, line 20 - line 49 *<br>* column 11, line 1 - line 10 * | 1-9<br><br>10,11 | TECHNICAL FIELDS SEARCHED (IPC)<br><br>H01M |
| Y | JIAO L F ET AL: "Synthesis of Cu0.1-doped vanadium oxide nanotubes and their application as cathode materials for rechargeable magnesium batteries", ELECTROCHEMISTRY COMMUNICATIONS, ELSEVIER, AMSTERDAM, NL,<br>vol. 8, no. 6, 1 June 2006 (2006-06-01), pages 1041-1044, XP028041577,<br>ISSN: 1388-2481, DOI:<br>10.1016/J.ELECOM.2006.03.043<br>[retrieved on 2006-06-01]<br>* page 1041 - page 1042 * | 10,11 | |

-/--

The present search report has been drawn up for all claims

| Place of search | Date of completion of the search | Examiner |
|---|---|---|
| Munich | 19 March 2012 | Langouët, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 11 19 4656

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | E. LEVI ET AL: "On the Way to Rechargeable Mg Batteries: The Challenge of New Cathode Materials", CHEMISTRY OF MATERIALS, vol. 22, no. 3, 9 February 2010 (2010-02-09), pages 860-868, XP55022022, ISSN: 0897-4756, DOI: 10.1021/cm9016497 * the whole document * ----- | 10,11 | |

TECHNICAL FIELDS SEARCHED (IPC)

The present search report has been drawn up for all claims

| Place of search | Date of completion of the search | Examiner |
|---|---|---|
| Munich | 19 March 2012 | Langouët, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 469 631 A1**

## ANNEX TO THE EUROPEAN SEARCH REPORT
## ON EUROPEAN PATENT APPLICATION NO.

EP 11 19 4656

19-03-2012

| Patent document cited in search report | | Publication date | Patent family member(s) | | | Publication date |
|---|---|---|---|---|---|---|
| EP 2270904 | A2 | 05-01-2011 | CN | 101958157 | A | 26-01-2011 |
| | | | EP | 2270904 | A2 | 05-01-2011 |
| | | | JP | 2011014373 | A | 20-01-2011 |
| | | | KR | 20110002815 | A | 10-01-2011 |
| | | | TW | 201121125 | A | 16-06-2011 |
| | | | US | 2011001094 | A1 | 06-01-2011 |
| WO 2011125834 | A1 | 13-10-2011 | NONE | | | |
| EP 2270916 | A2 | 05-01-2011 | CN | 101944589 | A | 12-01-2011 |
| | | | EP | 2270916 | A2 | 05-01-2011 |
| | | | JP | 2011029151 | A | 10-02-2011 |
| | | | KR | 20110002793 | A | 10-01-2011 |
| | | | US | 2011001084 | A1 | 06-01-2011 |
| EP 0634803 | A1 | 18-01-1995 | DE | 69403143 | D1 | 19-06-1997 |
| | | | DE | 69403143 | T2 | 28-08-1997 |
| | | | EP | 0634803 | A1 | 18-01-1995 |
| | | | JP | 3393621 | B2 | 07-04-2003 |
| | | | JP | 7057733 | A | 03-03-1995 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001076721 A
- JP 2002255555 A
- JP 2005228589 A
- JP 2006505109 A
- JP 2007280627 A
- JP 2009064731 A
- JP 2007157416 A